(19)

Europäisches
Patentamt
European
Patent Office
Office européen
des brevets

(11) **EP 2 461 409 A1**

(12) **EUROPEAN PATENT APPLICATION**
published in accordance with Art. 153(4) EPC

(43) Date of publication:
**06.06.2012 Bulletin 2012/23**

(51) Int Cl.:
*H01M 8/06* (2006.01)      *H01M 8/04* (2006.01)
*H01M 8/10* (2006.01)

(21) Application number: **10804020.5**

(22) Date of filing: **16.03.2010**

(86) International application number:
**PCT/JP2010/001864**

(87) International publication number:
**WO 2011/013267 (03.02.2011 Gazette 2011/05)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **31.07.2009 JP 2009180090**

(71) Applicant: **Sanyo Electric Co., Ltd.
Osaka 570-8677 (JP)**

(72) Inventors:
• **NISHIKAWA, Masato
  Moriguchi-shi
  Osaka 570-8677 (JP)**
• **NAKAMURA, Takahiro
  Moriguchi-shi
  Osaka 570-8677 (JP)**

(74) Representative: **Glawe, Delfs, Moll
Patent- und Rechtsanwälte
Postfach 26 01 62
80058 München (DE)**

(54) **DEVICE FOR REMOVING GENERATED WATER**

(57)     Generated water is quickly and surely removed from a fuel cell, and leakage of generated water is prevented. A diaphragm 13 atomizes or vaporizes generated water WL generated from a fuel cell 11 as electrical equipment through holes and removes generated water WF, WG to the outside of a gap when the diaphragm is operated. The holes 15 of the diaphragm 13 are formed of minute pores and thus can store generated water WL in the gap 14 when the diaphragm 13 is not operated.

FIG.1

## Description

Technical Field

The present invention relates to a generated water removing device, and particularly to a generated water removing device that can prevent leakage of generated water generated in portable and compact equipment and quickly and surely remove the generated water.

Background Art

Attention has been hitherto paid to fuel cells as energy sources for various kinds of electric/electronic equipment because the fuel cells have high energy conversion efficiencies and also generate no harmful substance through power generating reactions.

A unit cell constituting a fuel cell has an electrolytic layer and an oxidant electrode and a fuel electrode disposed at both the sides of the electrolytic layer to form a membrane electrode assembly (MEA).
Here, the unit cell contains an oxidant electrode side electrical conductive plate having plural air supply grooves which are concaved so as to cover the surface of the oxidant electrode constituting the membrane electrode assembly. Furthermore, the unit cell contains a gas separator disposed outside the oxidant electrode side electrical conductive plate. Furthermore, the unit cell contains a fuel electrode side electrical conductive plate having plural fuel gas supply grooves which are concaved so as to cover the surface of the fuel electrode constituting the membrane electrode assembly.

In the thus-constructed fuel cell, air is fed into the air supply grooves of the oxidant electrode side electrical conducive plate, and fuel gas is fed into the fuel gas supply grooves of the fuel electrode side electrical conductive plate, whereby power generation is performed.

It has been recently considered that a fuel cell is mounted as a power source in compact electronic equipment. For example, a direct methanol type fuel cell (DMFC) which can be configured to be thinner attracts much attention. In DMFC, oxidized gas such as air, oxygen or the like is supplied to the oxidant electrode, and fuel such as methanol or the like is supplied to the fuel electrode in the form of gas or liquid to perform power generation.

However, in order to mount a fuel cell in compact electronic equipment, when air (oxygen) is supplied as oxidant to the oxidant electrode, a gas supply device for supplying the oxidant is required to be miniaturize.

A device for supplying gas by vibrating a fuel cell has been disclosed as a compact gas supply device (see Patent Document 1 and Patent Document 2, for example). The Patent Document 1 proposes a gas jetting device for jetting gas by using plural chambers constructed by vibrators. Furthermore, the Patent Document 2 proposes a fuel cell having vibration applying means for vibrating an oxidant electrode, a fuel electrode, a separator, etc.

Prior Art Document

Patent Document

Patent Document 1 : JP-A-2005-243496
Patent Document 2 : JP-A-2002-203585

Summary of the Invention

Problem to be solved by the Invention

With respect to a fuel cell, water is generated in the process of power generation. However, when generated water (generated water) is not well discharged to the outside, it disturbs vibration of a vibrator or directly disturb supply of oxidant, so that efficient power generation cannot be performed.
Furthermore, it is desired that generated water is prevented from leaking out from equipment side or equipment when the equipment is not operated.
Therefore, an object of the present invention is to provide a generated water removing device that can quickly and surely remove from electrical equipment (electronic equipment) suchas a fuel cell or the like, and prevent leakage of generated water.

Means of solving the Problem

In order to attain the above object, according to the present invention, a generated water removing device for removing generated water generated from electrical equipment is characterized by comprising a diaphragm that is disposed so as to face a generated water discharge surface of the electrical equipment through a predetermined gap, and has a plurality of holes for atomizing or vaporizing the generated water, the generated water being removed to the outside of the gap through the holes, wherein the holes of the diaphragm are formed of minute pores that can store the generated water in the gap when the diaphragm is not operated.

According to the above construction, the diaphragm atomizes or vaporizes generated water generated from the electrical equipment through the holes and remove the generated water to the outside of the gap when the diaphragm is operated.
The holes of the diaphragm are formed of the minute pores, so that the generated water can be stored in the gap when the diaphragm is not operated.
Accordingly, when the diaphragm is operated, the generated water can be quickly and surely removed, and when the diaphragm is not operated, the generated water can be stored in the gap and thus leakage of the generated water can be prevented.

Furthermore, according to the present invention, a generated water removing device for removing generated water generated when power generation is performed by a fuel cell is characterized by comprising a diaphragm that is disposed so as to face a generated water discharge surface at an oxidant electrode side of the fuel cell through a predetermined gap, and has a plurality of holes for atomizing or vaporizing the generated water, the generated water being fed to the outside of the gap through the holes, wherein the holes of the diaphragm are formed of minute pores that can store the generated water in the gap when the diaphragm is not operated.

According to the above construction, the diaphragm atomizes or vaporizes through the holes generated water which is generated under power generation of the fuel cell, and removes the generated water to the outside of the gap when the diaphragm is operated.
The holes of the diaphragm are formed of the minute pores, and thus generated water can be stored in the gap when the diaphragm is not operated.
Accordingly, when the diaphragm is operated, generated water can be quickly and surely removed, and when the diaphragm is not operated, generated can be stored in the gap, so that leakage of generated water can be prevented.

In this case, all the pores may be arranged so as to confront air intake holes at an oxidant electrode side of the fuel cell.
According to the above construction, generated water locate at the air intake holes can be quickly removed. Therefore, supply of oxidant to the oxidant electrode can be prevented from being disturbed by the generated water, and thus power generation can be performed with high efficiency.

Still furthermore, the average diameter r of the pores satisfies: $1 \le r \le 100$ ($\mu$m).
According to the above construction, atomized generated water or vaporized generated water can pass through the pores, however, liquid generated water cannot pass through the pores. Therefore, during vibration of the diaphragm, generated water is fed to the outside of the gap, and when the diaphragm is not operated, generated water can be stored in the gap.

Still furthermore, each of the pores of the diaphragm is configured to be larger in diameter at a generated water discharge surface side of the diaphragm than that at the other surface side thereof.
According to the above construction, reception of liquid generated water is made easy, and also when the diaphragm is not operated, liquid generated water can be held in the gap.

Still furthermore, a water absorbing member is provided to a surface of the diaphragm which faces the discharge surface of the fuel cell.
According to the above construction, generated water is easily held by the water absorbing member, and under the state that the diaphragm is vibrated, generated water can be surely atomized or vaporized and removed to the outside of the gap.

Still furthermore, a surface of the diaphragm which faces the discharge surface of the fuel cell is formed of a hydrophilic material.
According to the above construction, the surface of the diaphragm which faces the discharge surface of the fuel cell can easily capture generated water, surely atomize or vaporize the generated water and remove the generated water to the outside of the gap.

Still furthermore, the discharge surface is formed of a water-repellent material.
According to the above construction, by vibrating the diaphragm, generated water can be easily exfoliated and removed from the discharge surface when the generated water is atomized or vaporized.

Effect of the Invention

According to the present invention, generated water can be quickly and surely removed from a fuel cell, and leakage of generated water can be prevented.

Brief Description of the Drawings

[Fig. 1] is a diagram showing the principle of a generated water removing device according to an embodiment.
[Fig. 2] is a diagram showing the construction of a portable fuel cell unit having the generated water removing device according to the embodiment.
[Fig. 3] is a diagram showing the cross-sectional shape of pores. Fig. 3(a) is a cross-sectional view when the cross-sectional shape of the pore is a truncated cone shape, and Fig. 3(b) is a cross-sectional view when the cross-sectional shape of the pore is a two-step cylindrical shape.
[Fig. 4] is a diagram showing the construction of a fuel cell.
[Fig. 5] is a diagram (part 1) showing frequency variation of a piezoelectric element.
[Fig. 6] is a diagram (part 2) showing the frequency variation of the piezoelectric element. ]
[Fig. 7] is a functional block diagram showing a fuel cell unit according to an embodiment.
[Fig. 8] is a flowchart showing control processing of the fuel cell. Fig. 8(a) is a processing flowchart of an UP mode, and Fig. 8(b) is a processing flowchart of a DOWN mode.
[Fig. 9] is a diagram (part 3) showing the frequency variation of the piezoelectric element.
[Fig. 10] is a diagram showing a modification of the embodiment. Fig. 10(a) is a diagram showing a first modification, and Fig. 10(b) is a diagram showing a second modification.
[Fig. 11] is a diagram showing a foldable cellular phone terminal in which a fuel cell having the generated water removing device according to the present invention is mounted.

[Fig. 12] is a diagram when a fuel cell is secured to a cellular phone terminal.

[Fig. 13] is a diagram showing the fuel cell unit mounted in a cover.

[Fig. 14] is a diagram when the fuel cell is secured to another cellular phone terminal.

[Fig. 15] is a diagram showing when the fuel cell is secured to another cellular phone terminal.

[Fig. 16] is a diagram showing the arrangement of air intake holes and pores.

[Fig. 17] is a diagram showing an acoustic pressure distribution. Fig. 17(a) is a diagram showing an acoustic pressure distribution in a predetermined direction along an oxidant supply path under a state that no water droplet adheres to a diaphragm, and Fig. 17 (b) is a diagram showing an acoustic pressure distribution in the same direction as the predetermined direction under a state that a water droplet adheres to the diaphragm.

Mode for carrying out the Invention

An embodiment according to the present invention will be described hereunder with reference to the drawings.

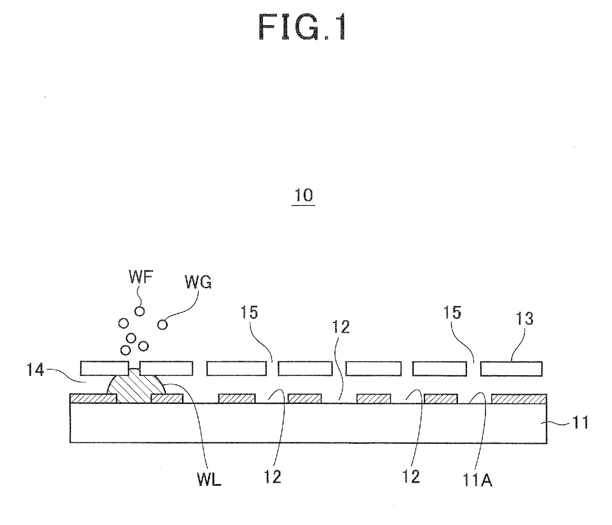

Fig. 1 is a. diagram showing the principle of a generated water removing device according to an embodiment.

A generated water removing device 10 removes generated water which a fuel cell 11 as electrical equipment (electronic equipment) generates on a surface 11A thereof.

The generated water removing device 10 is disposed so as to face a generated water discharge surface of the fuel cell 11 through an oxidant supply path 14 formed as a predetermined gap, and has plural holes 15 for atomizing or vaporizing liquid generated water WL. Furthermore, the generating water removing device 10 has a diaphragm 13 for removing generated water to the outside of an oxidant supply path 14 through the holes 15, and the holes 15 of the diaphragm 13 are formed as minute pores so that generated water WL can be accumulated in an oxidant supply path 14 formed as a predetermined gap when the diaphragm 13 is not operated.

Here, the pores 15 can hold generated water WL under a liquid state in the oxidant supply path 14 and transmit mist-like or gaseous generated water WF, WG therethrough because the diameter of each pore 15 is smaller than the liquid generated water WL and larger than the mist-like generated water WF or the gaseous generated water WG.

Accordingly, by making the diaphragm 13 vibrate, discharged generated water is atomized or vaporized, and directly removed through the pores 15 to the outside of the oxidant supply path. The flow of the atomized or vaporized generated water WF, WG does not disturb supply of oxygen as oxidant into air intake holes 12, and thus the power generation efficiency can be kept to a high value.

The size of the atomized or vaporized generated water WF, WG which has passed through the pores 15 is equal to or less than the diameter of the pores 15, that is, very small. Therefore, the atomized or vaporized generated water WF, WG has a small heat capacity and thus easily evaporated.

On the other hand, the liquid generated water WL cannot pass through the pores 15, and held in the oxidant supply path 14. Accordingly, liquid water exuding to the air intake holes 12 in connection with power generation of the fuel cell 11 does not leak to the outside, and conversely foreign materials having large diameters from the outside are prevented from intruding together with liquid or alone and reaching the surface of the oxidant electrode.

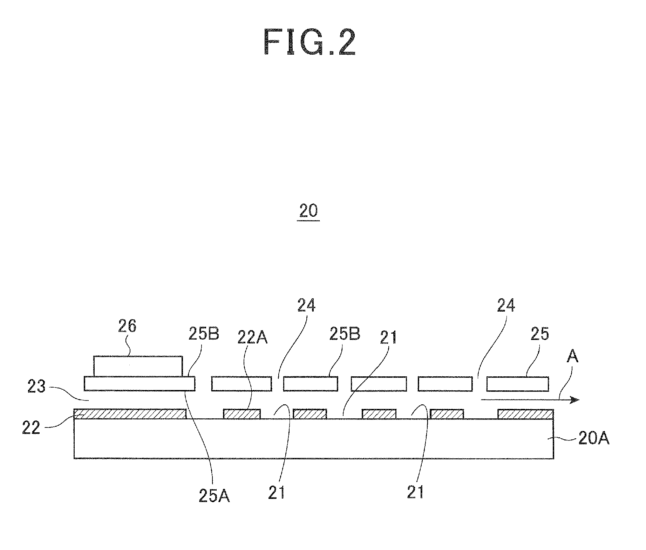

Fig. 2 is a diagram showing the construction of a portable fuel cell unit having the generated water removing device according to the embodiment.

The fuel cell unit 20 roughly comprises a fuel cell 20A, a flat type diaphragm 25 that is disposed so as to face an oxidant electrode side housing 22A constituting the fuel cell 20A and having plural air intake holes 21 through an oxidant supply path 23 configured as a predetermined gap and provided with minute pores 24 for holding liquid generated water in the oxidant supply path 23 under a normal use state and allowing mist-like generated water WF or gaseous generated water WG therethrough, and a piezoelectric element 26 for making the diaphragm 25 vibrate.

In order to make the understanding easy, the pores 24 are illustrated as being larger than the actual diameter thereof in Fig. 2.

The pores 24 are formed by electric discharge machining or plating, and the average diameter r of the pores 24 is set to be larger than the particle diameter ($<1\mu$m) of mist-like generated water WF or gaseous generated water WG, and smaller than the particle diameter ($>1000\mu$m) of particles (aggregate) of liquid generated water WL as follows.

$$1 \leq r \leq 100 \ (\mu m)$$

As a result, the liquid generated water WL cannot pass through the pores 24, and the mist-like generated water WF or the gaseous generated water WG can pass through the pores 24. In practical use, the average diameter r of the pores 24 is preferably set in the range from 10 to $50\mu$m from the viewpoint of a processing cost, etc.

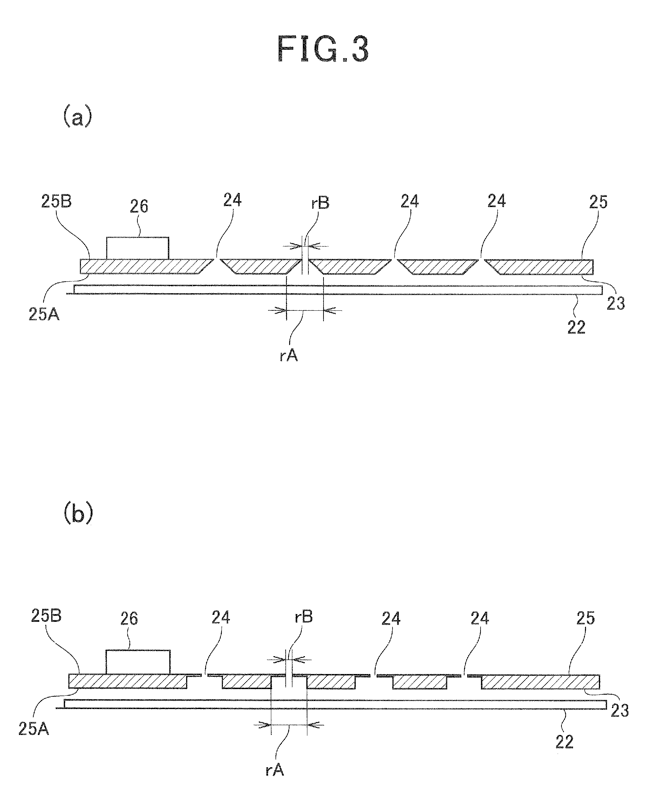

Fig. 3 is a diagram showing cross-sectional shapes of the pores.

The pores 24 are not required to have the same shape at both the surface 25A side and back surface 25B side of the diaphragm 25, the pores 24 are desirably shaped so that the diameter rA at the surface 25A side thereof is larger than the diameter rB at the back surface 25B side thereof as exemplified by a truncated conical shape in Fig. 3(a) or a two-step cylindrical shape in Fig. 3(b). This is because liquid generated water WL discharged from the oxidant electrode can be easily received and also liquid generated water WL is held in the oxidant supply path 23.

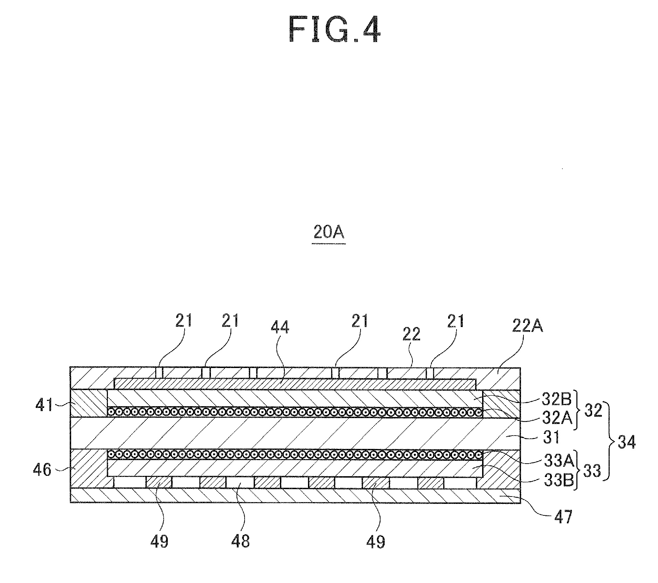

Fig. 4 is a diagram showing the construction of a fuel cell.

The fuel cell 20A has a membrane/electrode joint member 34 configured by disposing an oxidant electrode 32 and a fuel electrode 33 at both the sides of an electrolytic layer 31. Here, the oxidant electrode 32 functions as an oxidant electrode, and the fuel electrode 33 functions as an anode electrode.

The oxidant electrode 32 is supplied with air containing oxygen as oxidant.

The fuel electrode 33 is supplied with aqueous methanol solution or pure methanol (hereinafter referred to as "methanol fuel") by a capillary phenomenon.

As a result, the fuel cell 20A generates electric power through an electrochemical reaction between methanol in methanol fuel and oxygen in air.

The oxidant electrode 32 has an oxidant electrode catalytic layer 32A and an oxidant electrode base member 32B. The oxidant electrode catalytic layer 32A is joined to the electrolytic layer 31. The oxidant electrode base member 32B is formed of a material having an aeration property. Air passing through the oxidant base member 32B is supplied to the oxidant electrode catalytic layer 32A.

An oxidant electrode side gasket 41 is provided at the peripheral edge portion of the electrolytic layer 31 which is located at the oxidant electrode 32 side. An oxidant electrode sidle housing 22 is mounted through the oxidant electrode side gasket 41. The oxidant electrode side housing 22 is provided with air intake holes 21 through which air containing oxygen (oxidant gas) as oxidant is taken in and generated water generated through the reaction is discharged as described above.

Oxygen as oxidant flowing from the air intake holes 21 flows into an air chamber 44 constructed by the oxidant electrode 32, the oxidant electrode side gasket 41 and the oxidant electrode side housing 22, and reaches the oxidant electrode base member 32B. It is desired that the oxidant electrode side housing 22 has a water-repellent property. As the material constituting the oxidant electrode side housing is used metal material such as stainless-based metal, titan-based alloy or the like, or composite material such as acrylic resign, epoxy, glass epoxy resin, silicon, cellulose, Nylon (registered trademark), polyamide imide, polyallyl amide, polyallyl ether ketone, polyimide, polyurethane, polyether imide, polyether ether ketone, polyether ketone ether ketone ketone, polyether ketone ketone, polyether sulfone, polyethylene, polyethylene glycol, polyethylene terephthalate, polyvinyl chloride, polyoxymethylene, polycarbonate, polyglycolic acid, polydimethylsiloxane, polystyrene, polysulfone, polyvinyl alcohol, polyvinyl pyrrolidone, polyphenylene sulfide, polyphthalamide, polybutylene terephthalate, polypropylene, polyvinyl chloride, polytetrafluoroethylene, hard polyvinyl chlorine or the like.

Next, a fuel electrode side gasket 45 will be described.

The fuel electrode side gasket 45 of this embodiment is constructed by a gas-liquid separating filter as a whole. The fuel electrode side gasket 45 formed by the gas-liquid separating filter transmits gas generated at the fuel electrode 33 therethrough. On the other hand, the fuel electrode side gasket 45 has a gas-liquid separating function for blocking methanol fuel. A material for making the fuel electrode side gasket 45 develop the gas-liquid separating function may be a porous material such as woven cloth, non-woven cloth, mesh, felt or a sponge-like material having open bores.

As a composition constituting the porous material described above may be used polytetrafluoroethylene (PTFE), copolymer of tetrafluoroethylene-perfluoroaklyl vinyl ether(PFA), copolymer of tetrafluoroethylene-hexafluoropropropylene (FEP), copolymer of tetrafluoroethylene-ethylene (ETFE), polyvinylidene fluoride (PVDF), polychlorotrifluoroethylene (PCTFE), copolymer of chlorotrifluoroethylene-ethylene (E/CTFE), polyvinylfluoride (PVF), perfluoro cyclic polymer or the like.

The fuel electrode side gasket 45 formed by the gas-liquid separating filter preferably has a water-repellent property. Here, the water-repellent property is a property of repelling liquid fuel. More specifically, it is defined as a property that the critical surface tension calculated according to Zisman plot is lower than the surface tension of the liquid fuel.

The fuel electrode 33 has a fuel electrode catalytic layer 33A and a fuel electrode base member 33B. The fuel electrode catalytic layer 23A is joined to the electrolytic layer 31. The fuel electrode base member 33B is formed of a porous material. Methanol fuel passing through the fuel electrode base member 33B by the capillary phenomenon is supplied to the fuel electrode catalytic layer 33a. The fuel electrode base member 33B is preferably formed of an electrical conductive material having hydrophilicity. Here, the hydrophilicity described above is a property of fitting in liquid fuel. More specifically, it is defined as a property that the critical surface tension calculated according to Zisman plot is higher than the surface tension of the liquid fuel. As the electrical conductive material is used carbon paper, carbon felt, carbon cloth, a material obtained by coating each of these materials with hydrophilic coating, a material obtained by forming uniform minute holes in a sheet of titan-based alloy or stainless-based alloy through etching and then coating the resultant with corrosion-proof electrical conductive coating (for example, noble metal such as gold, platinum or the like) or the like.

A fuel electrode side gasket 46 is provided at the peripheral edge portion of the electrolytic layer 31 at the fuel electrode 33 side. A fuel electrode side housing 47 is mounted through the fuel electrode side gasket 46, and a fuel chamber 48 in which methanol fuel is stocked is constructed by the fuel electrode 33, the fuel electrode side gasket 46 and the fuel electrode side housing 47. A spacer 49 is provided to the fuel chamber 48.

The methanol fuel stocked in the fuel chamber 48 is directly supplied to the fuel electrode 33. The details of the fuel electrode side gasket 46 will be described later.

It is desired that the fuel electrode side housing 47 has characteristics such as resistance to methanol, acid resistance, mechanical rigidity, etc. Furthermore, it is desirable that the fuel electrode side housing 47 has hydrophilicity. The fuel electrode side housing 37 is provided with a fuel suction unit (not shown) for sucking methanol fuel from a fuel tank (not shown) or the like provided at the outside of the fuel cell 20A, and methanol fuel is supplemented into the fuel chamber 38 as required.

The materials described with respect to the oxidant electrode side housing 22 may be used as the material constituting the fuel electrode side housing 47. Furthermore, the distance between the fuel electrode 33 and the fuel electrode side housing 47 is kept by the spacer 49. The fuel electrode 33 is pressed against the electrolytic layer 31 by the spacer 49, so that the contact between the fuel electrode 33 and the electrolytic layer 31 is enhanced.

It is desired that the spacer 49 provided in the fuel chamber 48 has characteristics such as methanol resistance, acid resistance, mechanical rigidity, etc. Furthermore, when the spacer 49 is shaped to segmentalize the fuel electrode 33, it is desired that generated gas can pass through the spacer, and thus porous material may be used. For example, as the spacer 49 may be used porous material such as woven cloth, non-woven cloth, mesh or sponge-like material having open bores, which are formed of polyethylene, nylon (registered trademark), polyester, rayon, cotton, polyester/rayon, polyester/acryl, rayon/polychlal or the like, or organic solid of boron nitride, silicon nitride, tantalum carbide, silicon carbide, zeolite, attapulgite, zeolite, silicon oxide, titan oxide or the like in addition to the same porous material as the gas-liquid separating filter described above.

A material which is light in weight and has a high Young's modulus, for example, aluminum is preferably used for the diaphragm 25.

However, when it is formed of metal, duralumin, stainless or titan may be used, when it is formed of ceramic material, alumina, barium titanate, ferrite, silicon dioxide, zinc oxide, silicon carbide or silicon nitride may be used, and when it is formed of plastic material, fluorocarbon resin, polyphenyl sulfide resin, polyether sulfone resin, polyimide, polyacetal, or ethylene-vinyl alcohol copolymer (EVOH) may be used.

It is preferable that the thickness of the diaphragm 25 is set to 1.0mm or less.

The piezoelectric element 26 is preferably formed of a material having a large piezoelectric constant, for example, lead zirconate titanate (PZT). However, piezoelectric ceramics such as lithium tantalite ($LiTa_3$), lithium niobate ($LiNbO_3$), lithium tetraborate ($Li_2B_4O_7$) or the like, or crystalline quartz ($SiO_2$) may be used.

Here, gas (air or oxygen) supplied to the oxidant electrode 32 is fed by an acoustic stream which occurs in the oxidant supply path 23 by vibration of the diaphragm 25. Vibration energy is applied to water generated by the oxidant electrode 32 (generated water) by the diaphragm 25, whereby the generated water is atomized or vaporized, and then the generated water is discharged to the outside of the oxidant supply passage 23. In this case, the distance between the diaphragm 25 and the oxidant electrode side housing 22A is preferably set in the range from 0.1mm to 2.0mm in which the diaphragm 25 comes into contact with generated water on the oxidant electrode side housing 22A.

Here, the vibration frequency of the diaphragm 25 based on the piezoelectric element may be suitably selected from an ultrasonic wave band, an audio frequency band and a low frequency band. The audio frequency band and the low frequency band have a merit that the energy loss is smaller than the ultrasonic wave band. Furthermore, the ultrasonic wave band and the low frequency band have a merit that it is harder for a user to recognize noises as compared with the audio frequency band.

The surface 25A of the diaphragm 25 preferably has hydrophilicity, and the surface 22A of the oxidant electrode side housing 22A at the diaphragm 25 side and the back surface 25B of the diaphragm 25 are preferably water-repellent.

The surface 25A of the diaphragm 25 may be subjected to a surface treatment so that coating having hydrophilicity such as titan oxide coating or the like may be formed on the surface 25A of the diaphragm 25. The coating having hydrophilicity is not limited to titan oxide, but silicon nitride or iron oxide may be used.

Furthermore, the surface 22A of the oxidant electrode side housing 22 and the back surface 25B of the diaphragm 25 may be subjected to a surface treatment for forming coating having a water-repellent property such as PTFE (polytetrafluoroethylene) or the like. The coating having the water-repellent property is not limited to PTFE, but it may be formed of FEP (copolymer of tetrafluoroethylene and hexafluoropropylene) or PFA (copolymer of tetrafluoroethylene and perfluoroalkyl vinyl ether.

As described above, generated water generated from the oxidant electrode 32 having the water-repellent surface adheres to the surface 25A of the hydrophilic diaphragm 25 having hydrophilicity. The generated water moving from the oxidant electrode 32 to the diaphragm 25 hardly leaks to the outside because of surface tension. By vibrating the diaphragm 25 with ultrasonic waves, the water adhering to the diaphragm 25 is atomized or vaporized, passes through the pores 24 in the form of mist (water droplet) or gaseous water, reaches the back surface 25B of the diaphragm 25, and is removed by air flowing along the water-repellent back surface 25B without re-adhering to the back surface 25B of the diaphragm 25.

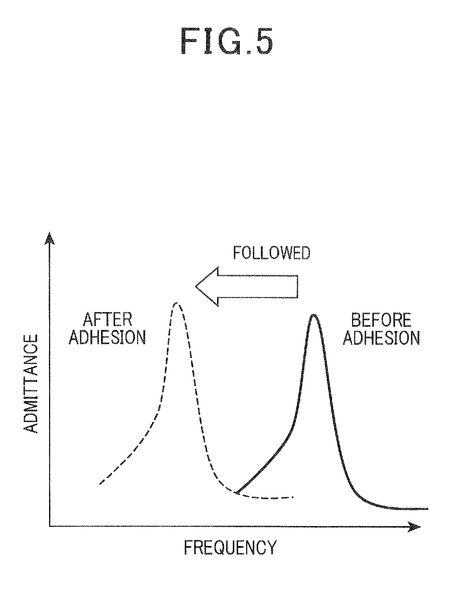

Fig. 5 is a diagram (part 1) showing frequency variation of the piezoelectric element.

Fig,. 6 is a diagram (part 2) showing the frequency variation of the piezoelectric element.

The fuel cell 20A may be provided with a control circuit for controlling the vibration of the diaphragm 25 and giving the resonance frequency of the diaphragm 25.

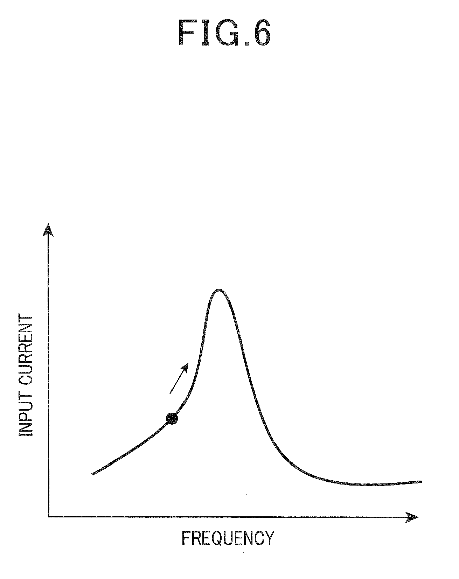

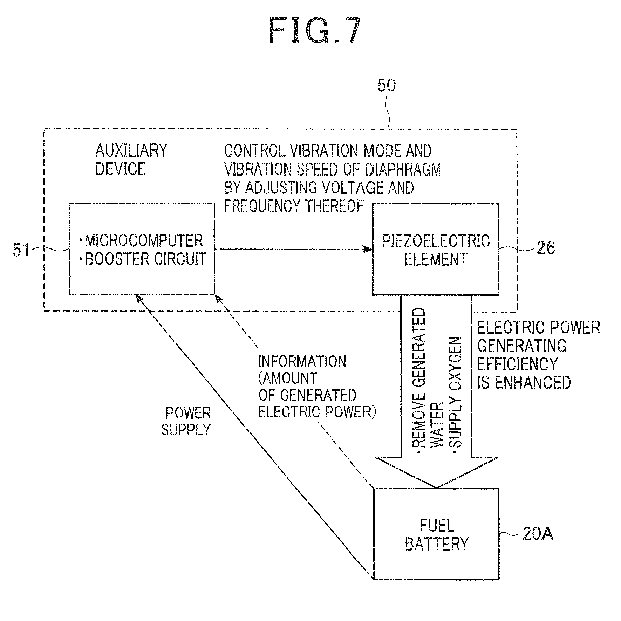

In this case, when the generated water adheres to the diaphragm 25, the resonance frequency concerned varies in accordance with the adhesion amount of the generated water. Therefore, as shown in Fig. 5, the control circuit performs the control so as to fit to the resonance frequency after the generated water adheres as shown in Fig. 7. For example, when a piezoelectric element 26 is used as the control circuit, a frequency at which input current is maximum corresponds to the resonance frequency. Therefore, as shown in Fig. 6, a maximum value at which the input current is maximum is determined, and it is set to the resonance frequency.

In the foregoing description, the piezoelectric element 26 is used as means for vibrating the diaphragm 25, however, a magnetostrictor may be used in place of the piezoelectric element 26. Furthermore, it is desired that the piezoelectric element 26 and the magnetostrictor are made water-repellent with coating.

Next, a method of controlling the fuel cell according to this embodiment will be described.

Fig. 7 is a functional block diagram showing a fuel cell unit according to a first embodiment.

Here, a microcomputer/booster circuit 51 and a piezoelectric element 26 are described as auxiliary devices 50 for controlling the fuel cell 20A. However, these auxiliary devices may be designed to be installed in the fuel cell 20A.

The microcomputer/booster circuit 51 supplies the piezoelectric element with a control signal for controlling the vibration mode and the vibration speed of the diaphragm 25 by adjusting the voltage and frequency thereof. In this case, the voltage waveform applied to the piezoelectric element 26 by the microcomputer/booster circuit 51 is a sine wave, a rectangular wave, a triangular wave, a saw tooth wave or the like in the ultrasonic wave band.

The piezoelectric element 26 vibrates the diaphragm 25 disposed in the fuel cell 20A to supply oxygen and remove generated water, so that the power generation efficiency of the fuel cell 20A can be enhanced.

In this case, the microccmputer/booster circuit 51 may be supplied with power from the fuel cell 20A as shown in Fig. 7, or supplied with power from an external power source (not shown).

Furthermore, information on the amount of generated power may be notified from the fuel cell 20A to the microcomputer/booster circuit 51. Here, when the amount of generated power is larger than a desired amount, the microcomputer/booster circuit 51 reduces the voltage to be applied to the piezoelectric element 26 to reduce the supply amount of oxygen as oxidant, thereby reducing the amount of generated power. On the other hand, when the amount of generated power is smaller than a desired amount, the voltage to be applied to the piezoelectric element 26 is increased to increase the supply amount of oxygen as oxidant, thereby increasing the amount of generated power.

The microcomputer/booster circuit 51 may adjust the distance between the oxidant electrode side housing 22A and the diaphragm 25 by varying the vibration amplitude of the piezoelectric element to vary the removing amount of generated water and the air supply amount, thereby adjusting the power generation efficiency. Furthermore, when the diaphragm 25 has plural resonance frequencies, the microcomputer/booster circuit 51 may change the vibration mode by frequency adjustment, and adjust the supply amount of oxidant and the evaporation amount of generated water. In order to reduce the power consumption, the operation may be intermittently performed during only a required time period.

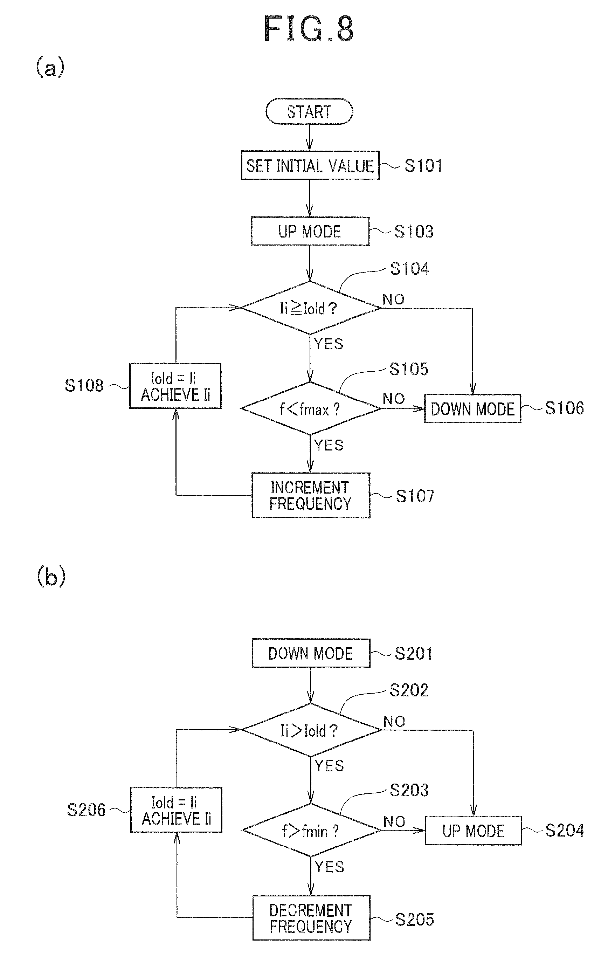

Fig. 8 is a flowchart showing the control processing of the fuel cell.

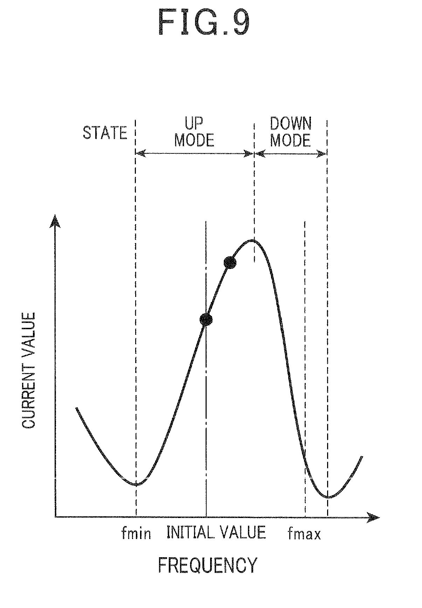

Fig. 9 is a diagram (part 3) showing the frequency variation of the piezoelectric element.

Next, a method of controlling the diaphragm 25 of the piezoelectric element will be described with reference to Figs. 8 and 9. The processing described below is executed by the microcomputer/booster circuit 51 for controlling the piezoelectric element 26.

First, the microcomputer/booster circuit 51 sets an initial value of the frequency of the piezoelectric element 26 (step S101). For example, 60kHz is set as the frequency (f) at the initial time of the piezoelectric element 26.

The microcomputer/booster circuit 51 measures a current value at the initially set frequency (f) of the piezoelectric element, and substitutes this value into a current value (Ii) and a current value (Iold). The current value (Ii) represents a current value which is updated every time, and the current value (Iold) represents a. previously measured current value. At the first measurement time, the same value obtained through the measurement is stored in the current value (Ii) and the current value (Iold).

In the following description, a mode in which the frequency is set to be higher than the previously detected frequency is referred to as UP mode, and a mode in which the frequency is set to be lower than the previously detected frequency is referred to as DOWN mode. In this case, a range in which the frequency is increased and reduced is set to the range between preset maximum frequency (fmax) and minimum frequency (fmin) as shown in Fig. 9. The maximum frequency (fmax) and the minimum frequency (fmin) are set so that the range contains a range in which the resonance frequency is estimated to vary in accordance with the adhering amount of generated water as shown in Fig. 5.

First, the microcomputer/booster circuit 51 shifts the processing to the UP mode (step S103).

Next, the microcomputer/booster circuit 51 determines whether the current value (Ii) is equal to or more than the previous current value (Iold) (step S104).

When the current value (Ii) is equal to or more than the previous current value (Iold) in the determination of the step S104 (step S104; Yes), it is determined whether the current frequency (f) is smaller than the maximum frequency (fmax) (step S105). Here, the maximum frequency (fmax) is assumed as a preset value as shown in Fig. 8.

When the current frequency (f) is smaller than the maximum frequency (fmax) in the determination of step S105 (step S105; Yes), the microcomputer/booster circuit 51 increments the frequency (step S107), substitutes the present current value (Ii) into the previous current value (Iold), substitutes the current value after the increment into the current value (Ii) (step S108), and returns to the processing of step S104.

When the current frequency (f) is not smaller than the maximum frequency (fmax) in the determination of step S105, the microcomputer/booster circuit 51 shifts the processing to DOWN mode processing (step S201) shown in Fig. 7(b).

Subsequently, the microcomputer/booster circuit 51 determines whether the current value (Ii) is larger than the previous current value (Iold) (step S202).

When the current value (Ii) is larger than the previous current value (Iold) in the determination of step S202 (step S202; Yes), the microcomputer/booster circuit 51 determines whether the current frequency (f) is larger than the minimum frequency (fmin) (step S203).

When the current frequency (f) is lager than the minimum frequency (fmin) in the determination of step S203 (step S203; Yes), the microcomputer/booster circuit 51 decrements the frequency (step S205).

Subsequently, the microcomputer/booster circuit 51 substitutes the present current value (Ii) into the previous current value (Iold), substitutes the current value after the decrement into the current value (Ii) (step S205), and returns to the processing of the step S202.

On the other hand, when the current frequency (f) is not larger than the minimum frequency (fmin), that is, the current frequency (f) is equal to or less than the minimum frequency(stepS203; No), the microcomputer/booster circuit 51 shifts the processing to the UP mode (step S204). That is, the microcomputer/booster circuit 51 shifts the processing to the step S103 shown in Fig. 7(a), and executes the same processing.

As described above, the microcomputer/booster circuit 51 shifts to the UP mode or the DOWN mode on the basis of the frequency and the current value which are just previously detected, and repeats this processing, whereby the frequency of the piezoelectric element is set to the optimum value.

As a result, according to the fuel cell unit 20 of this embodiment, the diaphragm 25 can be driven in conformity with a power generation state, and thus a generation state of generated water. Accordingly, vibration energy is efficiently applied to generated water WL under liquid state in the oxidant supply passage 23 so that the generated water WL is changed to atomized generated water WF or vaporized generated water WG, and the generated water WF or the generated water WG which are atomized or vaporized while passing through the pores 24 can be removed to the outside of the oxidant supply passage 23. Accordingly, when the atomized generated water WF or the vaporized generated water WG is removed, these generated water does not flow into the oxidant supply passage 23, so that it does not obstruct the flow of air as oxidant gas.

Furthermore, the oxidant gas can be efficiently made to flow through the oxidant supply passage 23 by diffusion of air in the oxidant supply passage 23 and the acoustic stream caused by the vibration of the diaphragm 25.

Accordingly, generated water exuding to the air intake holes 21 in connection with the power generation of the fuel cell 20A, and thus generated water under liquid state which exists in the oxidant supply passage 23 is quickly removed, whereby oxygen as oxidant can be efficiently supplied, and thus the power generation efficiency of the fuel cell 20A can be enhanced.

Furthermore, the surface 25A of the diaphragm 25 is hydrophilic, and the surface 22A of the oxidant electrode 32 is water-repellent. Therefore, the generated water easilymoves from the surface of the fuel cell 20A (the oxidant electrode side housing 22) to the diaphragm 25, and thus the contact area between the generated water and the diaphragm. 25 increases. As a result, energy is easily transferred and the generated water can be more efficiently removed.

Still furthermore, when the inside of the electrolytic layer 31 is resonated by excitation of the diaphragm 25, water adhering to the surface of the oxidant electrode side housing 22 or carbon dioxide adhering to the surface of the surface film of the fuel electrode 33 can be diffused to the flow path, so that the power generation efficiency can be more enhanced.

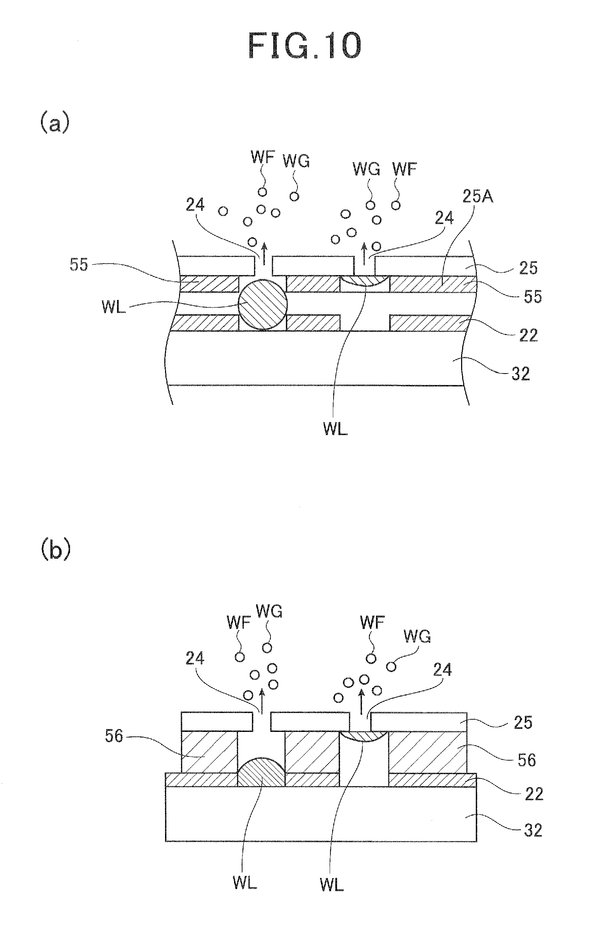

Fig. 10 is a diagram showing a modification of the embodiment. Fig. 10 (a) is a diagram showing a first modification, and Fig. 10(b) is a diagram showing a second modification.

In the foregoing description, the surface 25A of the diaphragm 25 at the oxidant electrode 32 side is hydrophilic. However, as shown in Figs. 10(a), (b), a water absorbing member 55 or a water absorbing member 56 may be provided to the surface 25A of the diaphragm 25 at the oxidant electrode 22 side.

As a result, liquid generated water WL which is not immediately atomized or vaporized by vibration of the diaphragm 25 is absorbed by the water absorbing members 55 and 56, and thus an effect of the liquid generated water WL on supply of oxidant gas in the oxidant supply path 23 can be further suppressed, so that power generation is performed with high efficiency.

Furthermore, vibration energy of the diaphragm 25 can be efficiently applied to generated water absorbed by the water absorbing members 55, 56 to promote atomization or vaporization of generated water, so that generated water can be quickly removed.

In the foregoing description, the fuel cell unit 20 is configured by providing the generate water device of the embodiment to the fuel cell 20A as a single body. In the following description, a fuel cell having the generated water removing device according to this embodiment is applied to various kinds of electronic equipment.

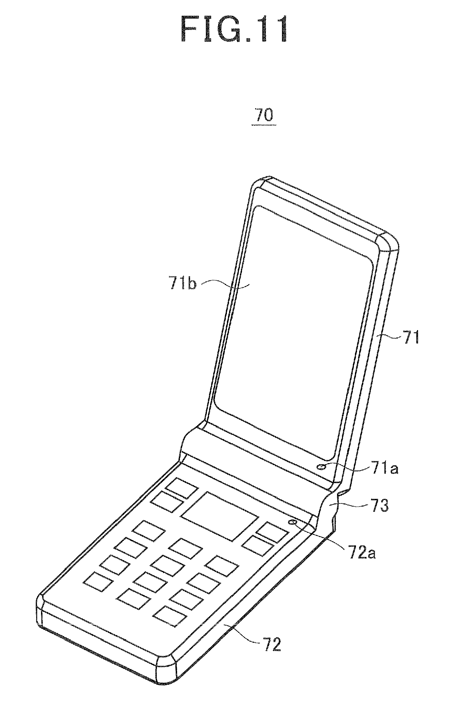

Fig. 11 is a diagram showing a foldable cellular phone terminal containing a fuel cell having the generated water removing device according to the present invention.

In the cellular phone terminal 70, a display side housing 71 and an operation side housing 72 are joined to each other through a hinge mechanism 73 so as to be openable and closable. A main display 71b is provided on the inner surface of the display side housing 71, and a sub display (not shown) is provided on the outer surface. A projection 71a is provided on the inner surface of the display side housing 71 to detect the opening/closing of the display side housing 71 and the operation side housing 72. An opening/closing detection switch 72a is provided on the inner surface of the operation side housing 72 so as to be turned on/off by the projection 71a.

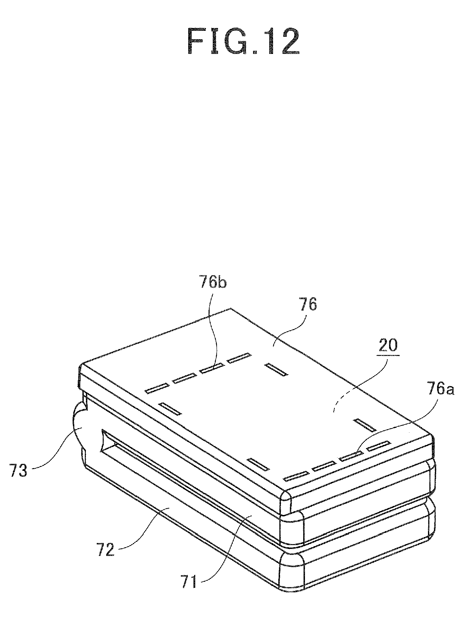

Fig. 12 is a diagram showing a case where a fuel cell is secured to a cellular phone terminal.

The cellular phone terminal 70 contains a fuel cell unit 20 having a generated water removing device according to the present invention contained inside a display side housing 71 or an operation side housing 72, or as shown in Fig. 12, the fuel cell unit 20 having the generated water removing device according to the present invention is secured to the back surface of the display side housing 71.

The fuel cell unit 20 is disposed inside a cover 76, and suction ports 76a for sucking air and discharge ports 76b for discharging air are formed in the cover 76. The suction ports 76a and the discharge ports 76b are provided with gas-liquid separation filters (not shown) so that liquid water occurring in the fuel cell unit 20A is prevented from leaking.

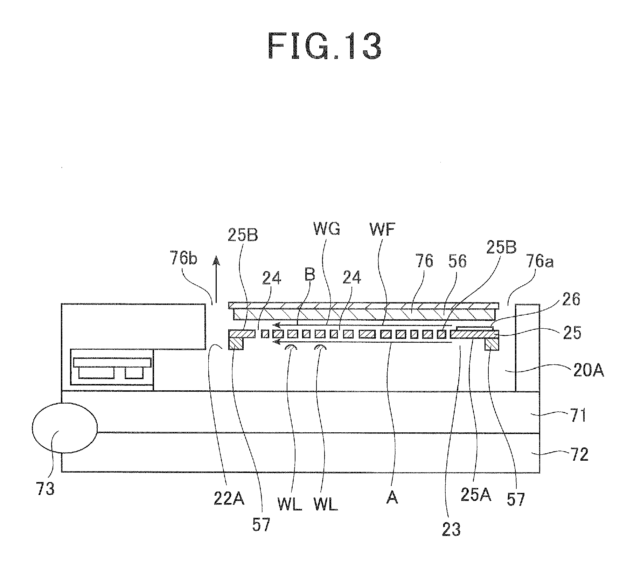

Fig. 13 is a diagram showing the fuel cell unit mounted in the cover.

As shown in Fig. 13, the suction ports 76a and the discharge ports 76b are disposed at the outside of a confronting area of the cover 76 which faces the diaphragm 25. Accordingly, air containing oxygen as oxidant sucked from the suction ports 76a flows into the oxidant supply path 23 without being blocked by the diaphragm 25 as indicated by an arrow A, and then discharged from the discharge ports 76b without being blocked by the diaphragm 25. As a result, highly efficient drift of air as oxidant gas is implemented.

In parallel to this, liquid generated water WL generated on the surface of the fuel cell 20A is changed to atomized or vaporized generated water WF, WG by the vibration of the diaphragm 25, passed through the pores 24 and directly removed to the outside of the oxidant supply path 23. Furthermore, the atomized or vaporized generated water WF, WG is discharged to the outside through the discharge ports 76B without returning to the oxidant supply path. 23 again as indicated by an arrow B. As described above, the size of the generated water WF, WG is equal to or less than the diameter of the pores 24, and thus this is very small. Therefore, the generated water WF, WG is easily evaporated.

In this case, as shown in Fig. 13, a gas-liquid separation filter 57 is disposed at the peripheral edge portion of the diaphragm 25, and the liquid generated water WL is stored in a space (oxidant supply path) formed by the diaphragm 25, the fuel cell 20A and the gas-liquid separation filter 57 when the diaphragm 25 is not operated. Therefore, the liquid generated water WL does not leak to the outside. Furthermore, a water absorbing member 56 is disposed so as to face the back surface 25B of the diaphragm 25, whereby even if the generated water WF, WG is liquefied again, it is immediately absorbed and thus it is prevented from leaking as liquid.

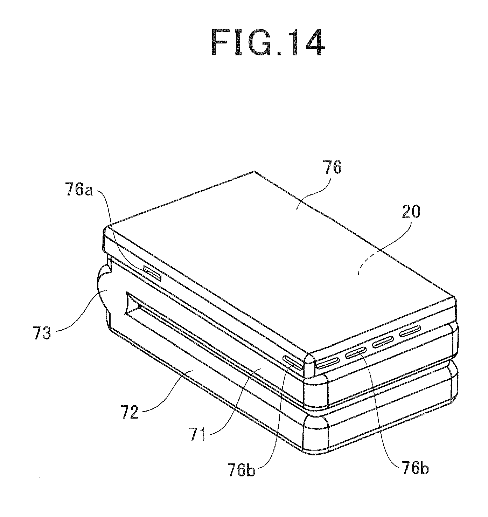

Fig. 14 is a diagram showing a case where the fuel cell is secured to another cellular phone terminal.

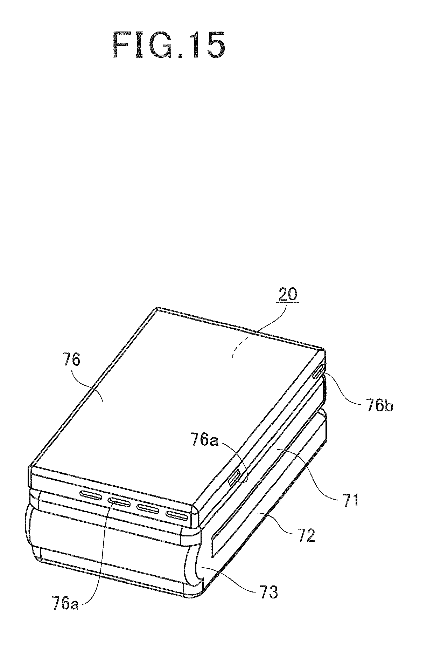

Fig. 15 is a diagram showing a case where the fuel cell is secured to another cellular phone terminal.

As shown in Figs. 14 and 15, the suction ports 76a and the discharge ports 76b may be formed in the side surface or upper and lower end surfaces of the cover 76 in the cellular phone terminal having the fuel cell unit 20 secured to the back surface of the display side housing 71.

It should be noted that all the foregoing embodiments and applications are examples and do not limit the present invention. The scope of the present invention is defined not by the description on the above embodiments and examples of constructions, but by the scope of claims, and further the present invention contains all modifications within the meaning and range of equivalents to the scope of claims.

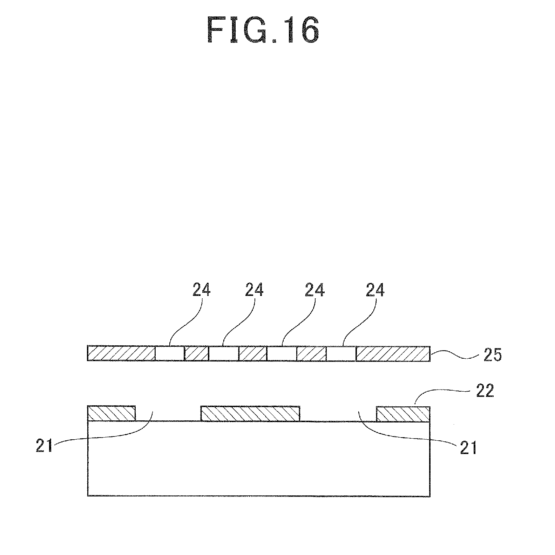

Fig. 16 is a diagram showing the arrangement of the air intake holes and the pores.

In the foregoing description, the arrangement relationship between the air intake holes 21 and the pores 24 is not described in detail. However, from the viewpoint of quickly removing liquid generated water WL in the oxidant supply path 23, it is preferable that the pores 24 are necessarily provided so as to face the air intake holes 21. In this case, when the air intake holes 21 and the pores 24 are designed to be circular in cross-section, it is preferable that the air intake holes 21 and the pores 24 are concentrically arranged.

Furthermore, as shown in Fig. 16, one or plural pores 24 may be disposed between two air intake holes 21.

Still furthermore, in the fuel cell described above, when generated water accumulates in the oxidant supply path 23, it serves as fluid resistance to air flowing in the oxidant supply path 23, and thus a sufficient air supply amount (oxidant supply amount) cannot be secured, so that the power generation efficiency of the fuel cell is lowered.

Therefore, at the time point when it is detected that water accumulates in the oxidant supply path 23, the operation state is switched from a normal operation to a water removing operation.

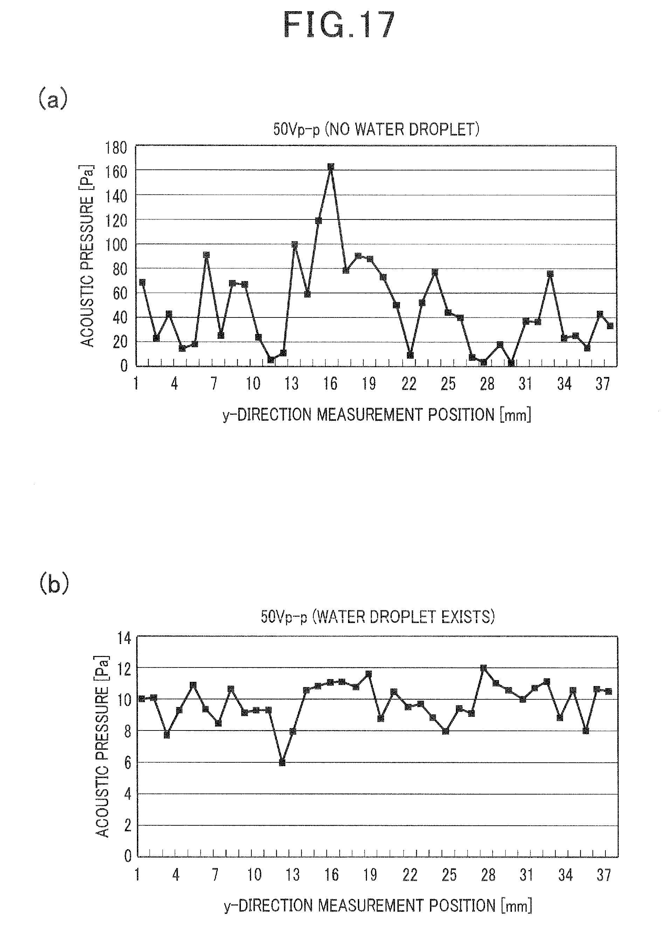

In this case, the time point when water accumulates in the oxidant supply path 23 may be determined on the basis of the magnitude of acoustic pressure in the oxidant supply path 23 which is detected by an acoustic pressure sensor (not shown) disposed in the oxidant supply path 23 and an acoustic pressure detecting circuit to which the output of the acoustic pressure sensor is input. Fig. 17 is a diagram showing an acoustic pressure distribution.

Fig. 17 (a) shows an acoustic pressure distribution in a predetermined direction along the oxidant supply path 23 under a state that no water droplet adheres to the diaphragm plate 25, and Fig. 16(b) shows an acoustic pressure distribution in the same direction as the predetermined direction under a state that a water droplet adheres to the diaphragm 25.

As shown in Fig. 17, the acoustic pressure in the oxidant supply path 23 is greatly reduced when any water droplet adheres to the diaphragm 25. Therefore, at the time point when the detected acoustic pressure underruns a predetermined threshold value, generated water can be determined to accumulate in the oxidant supply path 23, so that the diaphragm 25 can be operated at the optimum frequency and voltage to remove the generated water.

As a result, the diaphragm 25 is operated with a frequency and a voltage at which the supply efficiency of oxygen as oxidant to the oxidant electrode 32 is high until generated water accumulates in the oxidant supply path, whereby the power generation efficiency can be increased. In addition, at the time point when generate water causing decrease of the power generation efficiency accumulates, the generated water removing efficiency is increased, whereby a period for which the power generation efficiency is high can be lengthened, so that the effective power generation efficiency can be increased.

In the foregoing description, accumulation of generated water is directly detected, however, a time required for the accumulation of generated water is roughly estimated. For example, a time period for a normal operation (power generating operation) of operating the diaphragm 25 at a frequency and a voltage at which the supply efficiency of oxygen as oxidant to the oxidant electrode 32 is high is set to a first predetermined time (for example, 10 min), a time period for a generated water removing operation of operating the diaphragm 25 at a frequency and a voltage at which the generated water removing efficiency is high is set to a second predetermined time (for example, 10 msec), and the normal operation and the generated water removing operation are alternately switched to each other, whereby the power generation efficiency is maintained.

Three or more acoustic sensors may be disposed in the oxidant supply path 23 to monitor the acoustic pressure distribution in the oxidant supply path 23, whereby the time point at which generated water accumulates in the oxidant supply path 23 is detected.

When generated water is accumulating in the oxidant supply path 23, the resonance frequency in the oxidant supply path 23 varies, and thus current flowing in the piezoelectric element for making the diaphragm 25 vibrate decreases. Accordingly, by detecting this decrease, the control can be shifted from the normal operation control to the generated water removing operation control without using any acoustic sensor.

In this case, in connection with the change from the normal operation control to the generated water removing operation control, the vibrational frequency of the diaphragm 25 varies, the number of nodes and the number of loops of vibration vary, and the positions of the nodes and the positions of the loops shift during this process. In the generated water removing operation control, a water droplet adhering to the diaphragm plate 25 trends to move from the node position to the loop position, and thus water concentrates at the loop position in the vibration after the frequency is changed.

Therefore, in the generated water removing operation control, various positions of the diaphragm 25 are changed from nodes to loops or from loops to nodes by changing the frequency, whereby generated water can be efficiently atomized or vaporized and removed.

Likewise, the switch from the normal operation to the generated water removing operation may be performed by switching the vibrational frequency of the diaphragm 25 from the resonance frequency of the longitudinal vibration mode to the resonance frequency of the transverse vibration mode.

In the foregoing description, the fuel cell having the generated water removing device according to the present invention is used for the cellular phone terminal. However, the fuel cell is not limited to this style, and it may be used as a power source for any electronic equipment such as a charger for charging a cellular phone or the like, AV equipment such as a video camera or the like, a portable game machine, a navigation device, a handy cleaner, a power generator for business, a robot or the like.

Furthermore, a fuel cell can be designed as a flat module by using such a generated water removing device.

The generated water removing device according to the present invention is not limitedly used for a fuel cell, but it may be used in any application other than the application to the power source for any electronic equipment as described above. For example, the generated water removing device according to the present invention may be applied to the surface of an electronic circuit portion constituting electronic equipment so that the electronic circuit portion is cooled by gas (air), water which is being fed.

Description of Reference Numerals

| 10 | generated water removing device |
| 11 | fuel cell (electrical equipment, electronic equipment |
| 11A | surface |
| 12 | air intake hole |
| 13, | 25 diaphragm |
| 14 | oxidant supply path (gap) |
| 15, | 25 hole (pore) |
| 20 | fuel cell unit |
| 20A | fuel cell |
| 21 | air intake hole |
| 22 | oxidant electrode |
| 26 | piezoelectric element |
| 32 | oxidant electrode |
| 33 | fuel electrode |
| 34 | membrane/electrode joint member |
| 37 | fuel electrode side housing |
| 38 | fuel chamber |
| 50 | auxiliary device |
| 51 | microcomputer/booster circuit |
| 55, 56 | water absorbing member |
| 57 | gas-liquid separation filter |
| 70 | cellular phone terminal |
| WF, WG, WL | generated water |

**Claims**

1. A generated water removing device for removing generated water generated from electrical equipment, **characterized by** comprising a diaphragm that is disposed so as to face a generated water discharge surface of the electrical equipment through a predetermined gap, and has a plurality of holes for atomizing or vaporizing the generated water, the generated water being removed to the outside of the gap through the holes, wherein the holes of the diaphragm are formed of minute pores that can store the generated water in the gap when the diaphragm is not operated.

2. A generated water removing device for removing generated water generated when power generation is performed by a fuel cell, **characterized by** comprising a diaphragm that is disposed so as to face a generated water discharge surface at an oxidant electrode side of the fuel cell through a predetermined gap, and has a plurality of holes for atomizing or vaporizing the generated water, the generated water being fed to the outside of the gap through the holes, wherein the holes of the diaphragm are formed of minute pores that can store the generated water in the gap when the diaphragm is not operated.

3. The generated water removing device according to claim 2, wherein all the pores are arranged so as to confront air intake holes at an oxidant electrode side of the fuel cell.

4. The generated water removing device according to any one of claims 1 to 3, wherein an average diameter r of the pores satisfies: $1 \leq r \leq 100$ ($\mu$m).

5. The generated water removing device according to claim 4, wherein each of the pores of the diaphragm is configured to be larger in diameter at a generated water discharge surface side of the diaphragm than that at the other surface side thereof.

6. The generated water removing device according to any one of claims 1 to 5, wherein a water absorbing member is provided to a surface of the diaphragm which faces the discharge surface of the fuel cell.

7. The generated water removing device according to any one of claims 1 to 5, wherein a surface of the diaphragm which faces the discharge surface of the fuel cell is formed of a hydrophilic material.

8. The generated water removing device according to claim 6 or 7, wherein the discharge surface is formed of a water-repellent material.

# FIG.1

10

# FIG.2

# FIG.3

(a)

(b)

# FIG.4

# FIG.5

# FIG.6

EP 2 461 409 A1

# FIG.7

50

AUXILIARY DEVICE

CONTROL VIBRATION MODE AND VIBRATION SPEED OF DIAPHRAGM BY ADJUSTING VOLTAGE AND FREQUENCY THEREOF

51

·MICROCOMPUTER
·BOOSTER CIRCUIT

PIEZOELECTRIC ELEMENT

26

·REMOVE GENERATED WATER
·SUPPLY OXYGEN

ELECTRIC POWER GENERATING EFFICIENCY IS ENHANCED

INFORMATION (AMOUNT OF GENERATED ELECTRIC POWER)

POWER SUPPLY

FUEL BATTERY

20A

18

# FIG.8

(a)

```
              ┌─────────┐
              │  START  │
              └────┬────┘
                   │
         ┌─────────▼─────────┐
         │ SET INITIAL VALUE │─── S101
         └─────────┬─────────┘
                   │
            ┌──────▼──────┐
            │   UP MODE   │─── S103
            └──────┬──────┘
                   │              S104
                   │          ╱       NO
              ╱────▼────╲────────────────┐
             ╱ Ii≧Iold ? ╲               │
             ╲           ╱               │
              ╲────┬────╱                │
                   │ YES          S105   │
                   │           ╱         │
   ┌──────────╱────▼────╲  NO   ┌────────▼────────┐
   │         ╱ f<fmax ?   ╲─────►│   DOWN MODE     │─── S106
   │         ╲            ╱      └─────────────────┘
   │          ╲────┬────╱
   │               │ YES
   │               │
   │    ┌──────────▼──────────┐
   │    │      INCREMENT       │─── S107
   │    │      FREQUENCY       │
   │    └──────────┬──────────┘
   │               │
┌──┴──────────┐    │
│  Iold = Ii  │◄───┘
│  ACHIEVE Ii │─── S108
└─────────────┘
```

(b)

```
            ┌──────────────┐
            │  DOWN MODE   │─── S201
            └──────┬───────┘
                   │              S202
                   │          ╱       NO
              ╱────▼────╲────────────────┐
             ╱ Ii>Iold ? ╲               │
             ╲           ╱               │
              ╲────┬────╱                │
                   │ YES          S203   │
                   │           ╱         │
   ┌──────────╱────▼────╲  NO   ┌────────▼────────┐
   │         ╱ f>fmin ?   ╲─────►│    UP MODE      │─── S204
   │         ╲            ╱      └─────────────────┘
   │          ╲────┬────╱
   │               │ YES
   │               │
   │    ┌──────────▼──────────┐
   │    │      DECREMENT       │─── S205
   │    │      FREQUENCY       │
   │    └──────────┬──────────┘
   │               │
┌──┴──────────┐    │
│  Iold = Ii  │◄───┘
│  ACHIEVE Ii │─── S206
└─────────────┘
```

# FIG.9

# FIG.10

(a)

(b)

# FIG.11

70

71b

71

71a

73

72a

72

# FIG.12

# FIG.13

# FIG.14

# FIG.15

# FIG.16

# FIG.17

(a)

50Vp-p (NO WATER DROPLET)

(b)

50Vp-p (WATER DROPLET EXISTS)

## INTERNATIONAL SEARCH REPORT

| | International application No. |
|---|---|
| | PCT/JP2010/001864 |

**A. CLASSIFICATION OF SUBJECT MATTER**
*H01M8/06*(2006.01)i, *H01M8/04*(2006.01)i, *H01M8/10*(2006.01)i

According to International Patent Classification (IPC) or to both national classification and IPC

**B. FIELDS SEARCHED**

Minimum documentation searched (classification system followed by classification symbols)
H01M8/06, H01M8/04, H01M8/10

Documentation searched other than minimum documentation to the extent that such documents are included in the fields searched
Jitsuyo Shinan Koho         1922-1996     Jitsuyo Shinan Toroku Koho     1996-2010
Kokai Jitsuyo Shinan Koho     1971-2010     Toroku Jitsuyo Shinan Koho     1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | WO 2008/038735 A1  (Sanyo Electric Co., Ltd.),<br>03 April 2008 (03.04.2008),<br>paragraphs [0029] to [0041]; fig. 3, 6<br>& JP 2008-108708 A        & US 2009/0325011 A<br>& CA 2664762 A            & CN 101523646 A | 1,2,4,7,8<br>5,6<br>3 |
| Y | JP 2004-103277 A  (Denso Corp.),<br>02 April 2004 (02.04.2004),<br>claim 1<br>(Family: none) | 5 |
| Y | JP 01-115638 A  (Ricoh Co., Ltd.),<br>08 May 1989 (08.05.1989),<br>page 2; fig. 1<br>(Family: none) | 6 |

☒  Further documents are listed in the continuation of Box C.          ☐  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    16 June, 2010 (16.06.10) | Date of mailing of the international search report<br>    29 June, 2010 (29.06.10) |
|---|---|
| Name and mailing address of the ISA/<br>    Japanese Patent Office | Authorized officer |
| Facsimile No. | Telephone No. |

Form PCT/ISA/210 (second sheet) (July 2009)

<table>
<tr><td colspan="3" align="center">**INTERNATIONAL SEARCH REPORT**</td><td>International application No.<br>PCT/JP2010/001864</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2008/096657 A1 (Sanyo Electric Co., Ltd.), 14 August 2008 (14.08.2008), entire text & JP 2008-218402 A     & US 2010/0028739 A & CN 101606255 A | 1-8 |
| A | WO 2008/123055 A1 (Sanyo Electric Co., Ltd.), 16 October 2008 (16.10.2008), entire text & JP 2008-274929 A     & US 2010/0047664 A & CN 101663490 A | 1-8 |
| A | WO 2007/049756 A1 (Sanyo Electric Co., Ltd.), 03 May 2007 (03.05.2007), paragraph [0077]; fig. 8 & US 2009/0162720 A1    & EP 1950421 A1 & KR 10-2008-0059594 A   & CN 101297121 A | 1-8 |
| A | WO 2005/033523 A1 (KORFMACHER, Georg), 14 April 2005 (14.04.2005), entire text & DE 10345694 A | 1-8 |
| A | JP 2004-014192 A (Sony Corp.), 15 January 2004 (15.01.2004), entire text (Family: none) | 1-8 |
| A | JP 2002-203585 A (Toshiba Engineering Corp.), 19 July 2002 (19.07.2002), entire text (Family: none) | 1-8 |
| A | JP 2002-184430 A (Sharp Corp.), 28 June 2002 (28.06.2002), entire text (Family: none) | 1-8 |
| A | JP 2000-505521 A (DREVET, Jean-Baptiste), 09 May 2000 (09.05.2000), entire text & EP 880650 A          & WO 1997/029282 A1 & DE 69717255 D        & DE 69717255 T & FR 2744769 A         & AU 1883197 A & CA 2245895 A         & AT 228207 T & DK 880650 T          & ES 2185906 T & PT 880650 E | 1-8 |
| A | JP 2000-120600 A (NEC Yonezawa, Ltd.), 25 April 2000 (25.04.2000), entire text (Family: none) | 1-8 |

Form PCT/ISA/210 (continuation of second sheet) (July 2009)

**EP 2 461 409 A1**

**INTERNATIONAL SEARCH REPORT**

International application No.

PCT/JP2010/001864

C (Continuation).    DOCUMENTS CONSIDERED TO BE RELEVANT

| Category* | Citation of document, with indication, where appropriate, of the relevant passages | Relevant to claim No. |
|---|---|---|
| A | JP 10-326622 A  (Matsushita Electric Industrial Co., Ltd.), 08 December 1998 (08.12.1998), entire text & JP 2002-305018 A        & US 6117579 A & EP 867963 A2              & EP 1677379 A1 & CN 1194474 A | 1-8 |
| A | JP 08-178197 A  (NEC Corp.), 12 July 1996 (12.07.1996), entire text (Family: none) | 1-8 |

Form PCT/ISA/210 (continuation of second sheet) (July 2009)

31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005243496 A
- JP 2002203585 A